(19) Europäisches Patentamt
European Patent Office
Office européen des brevets

(11) **EP 4 742 060 A1**

(12) **EUROPEAN PATENT APPLICATION**

(43) Date of publication:
**13.05.2026 Bulletin 2026/20**

(21) Application number: **25209733.2**

(22) Date of filing: **20.10.2025**

(51) International Patent Classification (IPC):
***G06F 16/783*** (2019.01)

(52) Cooperative Patent Classification (CPC):
**G06F 16/7844**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.11.2024 US 202418944763**

(71) Applicant: **Honeywell International Inc.
Charlotte, NC 28202 (US)**

(72) Inventors:
• **AHADH, Abdhul
Charlotte, 28202 (US)**
• **S K, Pramod Krishna
Charlotte, 28202 (US)**

(74) Representative: **Haseltine Lake Kempner LLP
Cheapside House
138 Cheapside
London EC2V 6BJ (GB)**

(54) **METHOD AND SYSTEMS FOR EFFICIENTLY STORING VIDEO DATA**

(57) A video feed including a plurality of consecutive frames may be captured. A text-based description is generated for each of the plurality of consecutive video frames using an Artificial Intelligence (AI) based Video-to-Language Model (VLM). The text-based description describes one or more of an object, an activity and/or a scene captured in the respective video frame of the plurality of consecutive video frames. Some of the plurality of consecutive video frames of the video feed are selected to be reference video frames based at least in part on the text-based descriptions. The text-based descriptions are stored to the video surveillance data repository. The reference video frames are stored to the video surveillance data repository while those video frames of the plurality of consecutive video frames that are not selected as reference video frames are not stored.

10

FIG. 1

**Description**

TECHNICAL FIELD

The present disclosure relates generally to video surveillance systems. More particularly, the present disclosure relates to methods and systems for efficiently storing video surveillance data in a video surveillance system.

BACKGROUND

Video surveillance systems generate vast amounts of data requiring extensive storage capacity. This can translate into significant infrastructure and maintenance costs. The importance of this problem is underscored by the growing reliance on surveillance for security and operational monitoring across various sectors, including retail, transportation, healthcare, and public safety. As the number of cameras and the resolution of footage increase, so do the associated storage requirements and costs. Moreover, the retrieval and analysis of specific events within this data can be time-consuming and inefficient, posing additional operational challenges and potentially delaying critical responses. What would be desirable are methods and system for reducing the storage requirements of a video surveillance system while still enabling recall of the video surveillance video feeds.

SUMMARY

The present disclosure relates generally to video surveillance systems. More particularly, the present disclosure relates to efficiently storing video surveillance data in a video surveillance system. An example may be found in a method that includes receiving a video feed captured by a video camera of a video surveillance system. The video feed includes a plurality of consecutive video frames. A text-based description is generated for each of the plurality of consecutive video frames using an Artificial Intelligence (AI) based Video-to-Language Model (VLM). The text-based description describes one or more of an object, an activity and/or a scene captured in the respective video frame of the plurality of consecutive video frames. Less than all of the plurality of consecutive video frames of the video feed are selected to be reference video frames, where the selection is based at least in part on the text-based descriptions for the plurality of consecutive video frames. The text-based descriptions for each of the plurality of consecutive video frames are stored to a video surveillance data repository. The reference video frames are stored to the video surveillance data repository while not storing those video frames of the plurality of consecutive video frames that are not selected as reference video frames. This can save significant storage space on the video surveillance data repository.

Another example may be found in a system for storing video surveillance data. The illustrative system includes an input for receiving a video feed captured by a video camera, a video surveillance data repository, and a controller that is operatively coupled to the input and the video surveillance data repository. The video feed including a plurality of consecutive video frames. The controller is configured to receive the video feed captured by the video camera. The controller is configured to generate a text-based description for each of the plurality of consecutive video frames using an Artificial Intelligence (AI) based Video-to-Language Model (VLM), where the text-based description describes one or more of an object, an activity and/or a scene captured in the respective video frame of the plurality of consecutive video frames. The controller is configured to select less than all of the plurality of consecutive video frames of the video feed to be reference video frames, wherein the selection is based at least in part on the text-based descriptions for the plurality of consecutive video frames. The controller may store the text-based descriptions for each of the plurality of consecutive video frames to the video surveillance data repository. The controller is configured to store the reference video frames to the video surveillance data repository while not storing those video frames of the plurality of consecutive video frames that are not selected as reference video frames.

Another example may be found in a non-transitory computer readable medium storing instructions. When the instructions are executed by one or more processors, the one or more processors are caused to receive a video feed captured by a video camera, the video feed including a plurality of video frames. The one or more processors are caused to generate a text-based description for each of the plurality of video frames using an Artificial Intelligence (AI) based Video-to-Language Model (VLM), where the text-based description describes one or more of an object, an activity and/or a scene captured in the respective video frame of the plurality of video frames. The one or more processors are caused to select less than all of the plurality of video frames of the video feed to be reference video frames, wherein the selection is based at least in part on the text-based descriptions for the plurality of video frames. The one or more processors are caused to store the text-based descriptions for each of the plurality of video frames to a video surveillance data repository to a video surveillance data repository, or at least one or more of the plurality of video frames that are not selected as reference video frames. The one or more processors are caused to store the reference video frames to the video surveillance data repository while not storing those video frames of the plurality of video frames that are not selected as reference video frames.

The preceding summary is provided to facilitate an understanding of some of the innovative features unique to the present disclosure and is not intended to be a full description. A full appreciation of the disclosure can be gained by taking the entire specification, claims, figures, and abstract as a whole.

BRIEF DESCRIPTION OF THE FIGURES

The disclosure may be more completely understood in consideration of the following description of various examples in connection with the accompanying drawings, in which:

Figure 1 is a schematic block diagram showing an illustrative system for storing video surveillance data;
Figures 2A, 2B, 2C and 2D are flow diagrams that together show an illustrative method for storing video surveillance data;
Figure 3 is a flow diagram showing an illustrative method; and
Figure 4 is a flow diagram showing an illustrative method.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

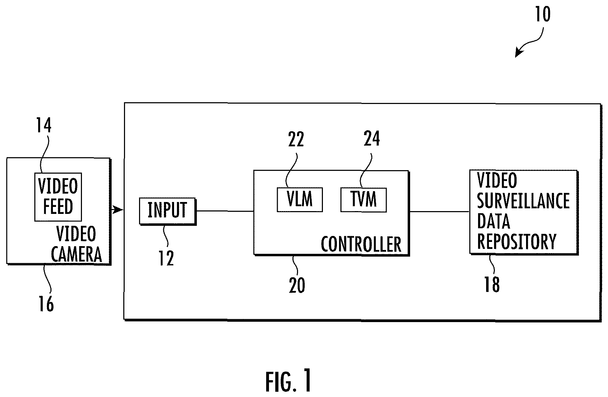

Figure 1 is a schematic block diagram showing an illustrative system 10 for storing video surveillance data. The illustrative system 10 includes an input 12 for receiving a video feed 14 that was captured by a video camera 16. The system 10 includes a video surveillance data repository 18. A controller 20 is operatively coupled to the input 12 and the video surveillance data repository. In some cases, the controller 20 includes, or has access to, an Artificial Intelligence (AI) based Video-to-Language Model (VLM) 22. In some cases. The controller 20 includes, or has access to, an Artificial Intelligence (AI) based Text-to-Video Model (TVM) 24.

The controller 20 is configured to receive the video feed 14 captured by the video camera 16. The controller 20 is configured to generate a text-based description for each of the plurality of consecutive video frames using the VLM 22. The text-based description describes one or more of an object, an activity and/or a scene captured in the respective video frame of the plurality of consecutive video frames. The controller 20 is configured to select less than all of the plurality of consecutive video frames of the video feed 14 to be reference video frames, wherein the selection is based at least in part on the text-based descriptions for the plurality of consecutive video frames. In some cases, the controller 20 is configured to store the text-based descriptions for each of the plurality of consecutive video frames to the video surveillance data repository 18. The controller 20 is configured to store the reference video frames to the video surveillance data repository 18 while not storing those video frames of the plurality of consecutive video frames that are not selected as reference video frames. This can save significant storage space on the video surveillance data repository 18.

In some cases, the controller 20 may be configured, for each of the generated text-based descriptions, to identify a corresponding one of the reference video frames, wherein at least two of the text-based descriptions correspond to a common reference video frame. The controller 20 may be configured to store a correspondence between the generated text-based descriptions and the reference video frames. In some cases, the controller 20 may be configured to select one of the plurality of consecutive video frames of the video feed 14 as a reference video frame when the text-based descriptions of the plurality of consecutive video frames indicate at least a threshold change in context in the text-based descriptions of the plurality of consecutive video frames.

In some cases, the controller 20 may be configured to tokenize the text-based description of each of the plurality of consecutive video frames. The controller 20 may be configured to determine a similarity index between the embedded text-based descriptions of pairs of consecutive video frames of the plurality of consecutive video frames. The controller 20 may be configured to determine when the threshold change in context in the text-based descriptions of the plurality of consecutive video frames has occurred based at least in part on whether the similarity index between the embedded text-based descriptions falls below a threshold value. In some cases, the controller 20 may be configured to determine when the threshold change in context in the text-based descriptions of the plurality of consecutive video frames has occurred based at least in part on whether a rolling average of the similarity indices between the embedded text-based descriptions changes by more than a temporal consistency threshold.

In some cases, the controller 20 may be configured to determine an attention score for each of the text-based descriptions for each of the plurality of consecutive video frames, determine when the attention score changes by more than an attention change threshold, and determine when the threshold change in context in the text-based descriptions of the plurality of consecutive video frames has occurred based at least in part on whether the attention score changes by more than the attention change threshold.

In some cases, the controller 20 may be configured to receive an input query from a user and to retrieve from the video surveillance data repository 18 a plurality of matching text-based descriptions that match the input query. The controller 20 may be configured to retrieve from the video surveillance data repository 18 one or more reference video frames that correspond to the plurality of matching text-based descriptions. The controller 20 may be configured to generate a reconstructed video feed using the TVM 24, wherein the TVM 24 uses the one or more reference video frames as a reference input along with the text-based descriptions to generate a plurality of reconstructed video frames that reconstruct the plurality of matching text-based descriptions.

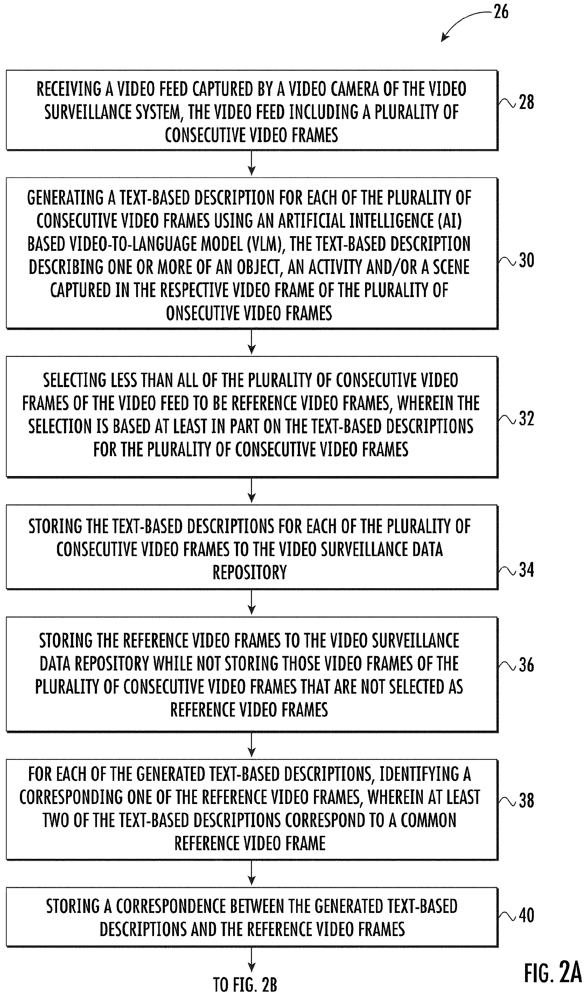

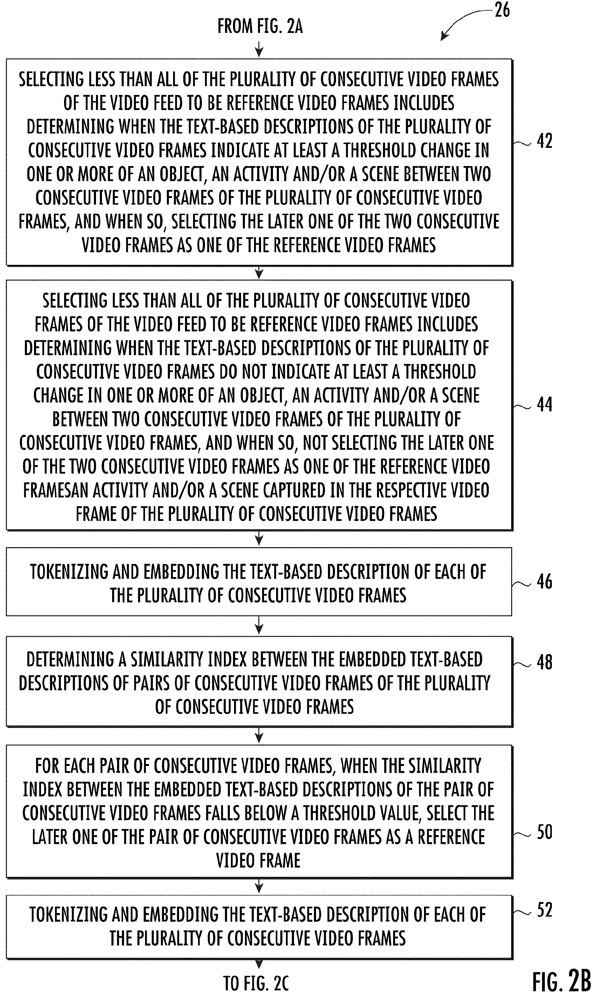

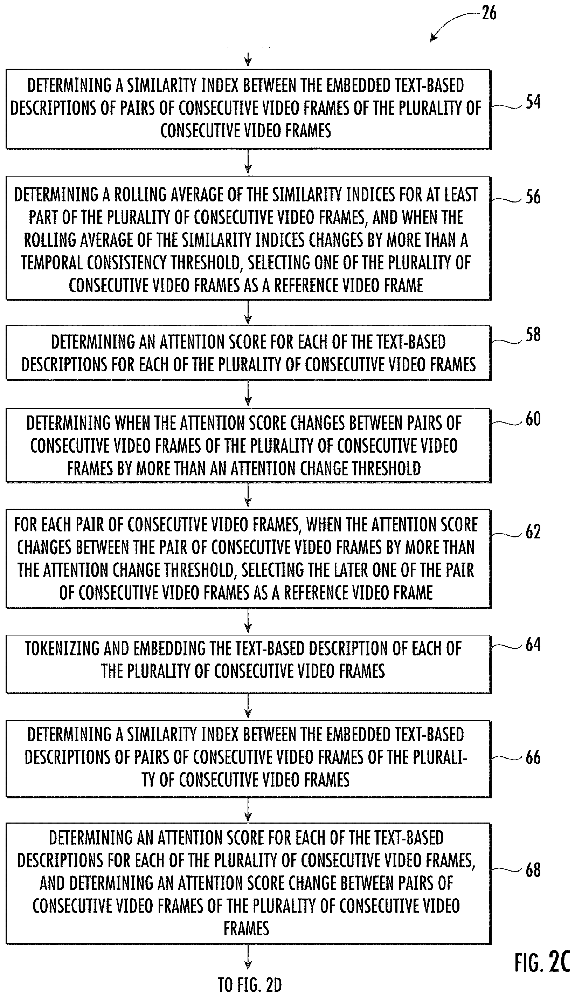

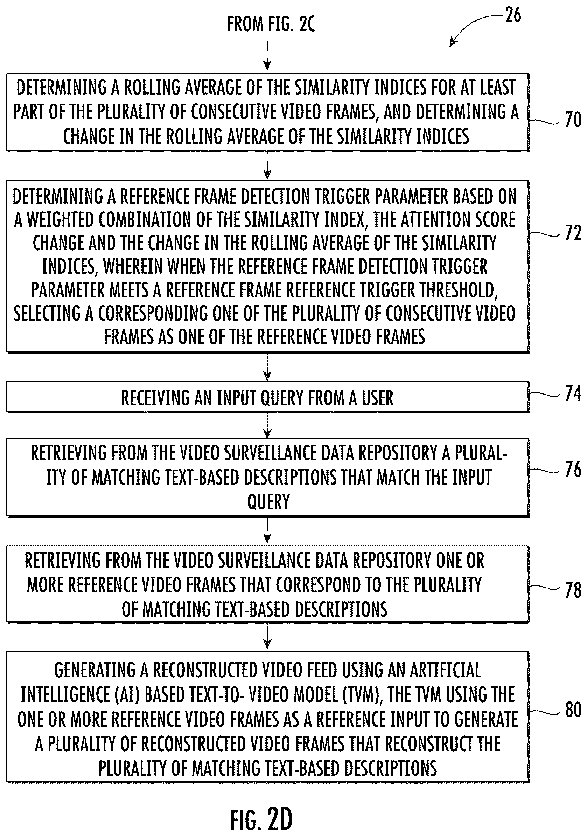

Figures 2A, 2B, 2C and 2D are flow diagrams that together show an illustrative method 26 for storing video surveillance data of a video surveillance system in a video surveillance data repository (such as the video surveillance data repository 18). The illustrative method 26 includes receiving a video feed captured by a video camera of the video surveillance system, the video feed including a plurality of consecutive video frames, as indicated at block 28. A text-based description is generated for each of the plurality of consecutive video frames using an Artificial Intelligence (AI) based Video-to-Language Model (such as the VLM 22), where the text-based description describes one or more of an object, an activity and/or a scene captured in the respective video frame of the plurality of consecutive video frames, as indicated at block 30. Less than all of the plurality of consecutive video frames of the video feed are selected to be reference video frames, wherein the selection is based at least in part on the text-based descriptions of the plurality of consecutive video frames, as indicated at block 32. The text-based descriptions for each of the plurality of consecutive video frames are stored to the video surveillance data repository, as indicated at block 34. The reference video frames are stored to the video surveillance data repository while not storing those video frames of the plurality of consecutive video frames that are not selected as reference video frames are not stored to the video surveillance data repository, as indicated at block 36. In some cases, the method 26 includes, for each of the generated text-based descriptions, identifying a corresponding one of the reference video frames, wherein at least two of the text-based descriptions correspond to a common reference video frame, as indicated at block 38. A correspondence between the generated text-based descriptions and the reference video frames may be stored, as indicated at block 40.

Continuing on to Figure 2B, selecting less than all of the plurality of consecutive video frames of the video feed to be reference video frames may include determining when the text-based descriptions of the plurality of consecutive video frames indicate at least a threshold change in one or more of an object, an activity and/or a scene between two consecutive video frames of the plurality of consecutive video frames, and when so, selecting the later one of the two consecutive video frames as one of the reference video frames, as indicated at block 42. In some cases, selecting less than all of the plurality of consecutive video frames of the video feed to be reference video frames may include determining when the text-based descriptions of the plurality of consecutive video frames do not indicate at least a threshold change in one or more of an object, an activity and/or a scene between two consecutive video frames of the plurality of consecutive video frames, and when so, not selecting the later one of the two consecutive video frames as one of the reference video frames, as indicated at block 44.

In some cases, the method 26 may include tokenizing and embedding the text-based description of each of the plurality of consecutive video frames, as indicated at block 46. A similarity index between the embedded text-based descriptions of pairs of consecutive video frames of the plurality of consecutive video frames may be determined, as indicated at block 48. For each pair of consecutive video frames, when the similarity index between the embedded text-based descriptions of the pair of consecutive video frames falls below a threshold value, the method 26 may include selecting the later one of the pair of consecutive video frames as a reference video frame, as indicated at block 50.

In some cases, the method 26 may include tokenizing and embedding the text-based description of each of the plurality of consecutive video frames, as indicate at block 52. Continuing on to Figure 2C, a similarity index between the embedded text-based descriptions of pairs of consecutive video frames of the plurality of consecutive video frames may be determined, as indicated at block 54. A rolling average of the similarity indices for at least part of the plurality of consecutive video frames may be determined, and when the rolling average of the similarity indices changes by more than a temporal consistency threshold, one of the plurality of consecutive video frames may be selected as a reference video frame, as indicated at block 56.

In some cases, the method 26 may include determining an attention score for each of the text-based descriptions for each of the plurality of consecutive video frames, as indicated at block 58. The attention score can be used to identify a shift in contextual focus in the text-based descriptions of the consecutive video frames. A determination may be made as to when the attention score changes between pairs of consecutive video frames of the plurality of consecutive video frames by more than an attention change threshold, as indicated at block 60. For each pair of consecutive video frames, when the attention score changes between the pair of consecutive video frames by more than the attention change threshold, the method 26 may include selecting the later one of the pair of consecutive video frames as a reference video frame, as indicated at block 62.

In some cases, the method 26 may include tokenizing and embedding the text-based description of each of the plurality of consecutive video frames, as indicated at block 64. A similarity index between the embedded text-based descriptions of pairs of consecutive video frames of the plurality of consecutive video frames may be determined, as indicated at block 66. An attention score may be determined for each of the text-based descriptions for each of the plurality of consecutive video frames, and an attention score change between pairs of consecutive video frames of the plurality of consecutive video frames may be determined, as indicated at block 68. Continuing on to Figure 2D, a rolling average of the similarity indices for at least part of the plurality of consecutive video frames may be determined, and determining a change in the rolling average of the similarity indices may be determined, as indicated at block 70. A reference frame detection trigger parameter may be determined based on a weighted combination of the similarity index, the attention score change and the change in the rolling average of the similarity indices, wherein when the reference frame detection trigger parameter meets a reference frame reference trigger threshold, selecting a corresponding one of the plurality of consecutive video frames as one of the reference video frames, as indicated at block 72.

In some cases, the method 26 may include receiving an input query from a user, as indicated at block 74. In some cases, the input query may include a time-based query. In some cases, the input query may include a search-based query. A plurality of matching text-based descriptions that match the input query may be retrieved from the video surveillance data repository, as indicated at block 76. One or more reference video frames that correspond to the plurality of matching text-based descriptions may be retrieved from the video surveillance data repository, as indicated at block 78. A reconstructed video feed may be generated using an Artificial Intelligence (AI) based Text-to- Video Model (TVM). The TVM may use the one or more reference video frames as a reference input and the text-based descriptions of the video frames that match the query to generate a plurality of reconstructed video frames that reconstruct the plurality of matching text-based descriptions in a video format, as indicated at block 80.

Example text based descriptions that may be generated by an Artificial Intelligence (AI) based Video-to-Language Model (VLM) for each of ten (10) consecutive video frames of an example video segment is shown below.

Frame 1: A middle-aged man, approximately 5'10" tall, is walking across the parking lot. He wears a red hat that casts a shadow across his forehead and part of his nose. His facial expression is neutral, with relaxed eyebrows and a slight squint in his eyes from the sunlight. His lips are pressed together gently, suggesting a calm, focused demeanor. He wears a blue jacket, unzipped to mid-chest, with slight creases around the elbows and shoulders as he swings his arms. His faded jeans show wrinkles near his knees, and he is wearing brown leather shoes. His right foot is firmly planted at (x: 230, y: 400), while his left foot is lifted in mid-stride at (x: 245, y: 380). The gray asphalt beneath him is rough and cracked, with small fractures running diagonally from (x: 100, y: 450) to (x: 600, y: 300). Yellow parking lines appear on either side, approximately 100 pixels apart, faintly worn from use. A red sedan is parked about 15 feet away, with its front bumper visible at (x: 500, y: 590) and its windshield reflecting the bright sunlight. The glare on the windshield forms a bright spot at (x: 510, y: 580), and the car's body has small specks of dust visible along the side. The shadow of the car stretches eastward about 120 pixels from (x: 480, y: 590) to (x: 360, y: 600). To the left of the scene, a row of bushes sways gently in the breeze, with green leaves casting intricate shadows on the ground from (x: 10, y: 20) to (x: 100, y: 100). In the distance, a concrete wall forms the boundary of the parking lot, running horizontally across the frame at the top.

Frame 2: The man continues his walk, now with his left foot lowered and planted on the ground at (x: 240, y: 385), while his right foot begins to lift off slightly at (x: 225, y: 395). His face shows a faint look of concentration, with his lips still closed but now slightly tighter as if in thought. His red hat sits squarely on his head, with a more pronounced shadow under its brim as the sun shifts. His blue jacket swings with his movement, with more defined wrinkles forming at the elbows. The jacket's material shimmers slightly in the sunlight, particularly around his left shoulder, where the light hits at an angle. The jeans show additional creases near the knees, and his brown shoes now scuff slightly against the asphalt. The ground beneath him is more visible, with the cracks in the asphalt appearing more prominent around (x: 110, y: 470). The yellow parking lines remain in place, though some faint tire tracks are now visible near his left foot, likely from a vehicle that passed recently. The red sedan remains parked, but the glare on the windshield has shifted slightly, now reflecting more sunlight at (x: 515, y: 585). A few dust particles are kicked up by the slight breeze and float near the rear of the car at (x: 510, y: 610). The car's shadow has shortened slightly to 115 pixels, from (x: 485, y: 595) to (x: 370, y: 600). The man's shadow, cast by the sun overhead, has also shortened slightly, now stretching 115 pixels from (x: 230, y: 400) to (x: 115, y: 460). The bushes to the left are swaying a bit more, their leaves reflecting sunlight and casting intricate shadows on the asphalt. The background concrete wall is now partially obscured by the movement of the leaves, with patches of sunlight shining through.

Frame 3: The man's expression has tightened slightly, with his eyebrows furrowing just a bit as if he's thinking hard about something. His left foot is now fully grounded at (x: 245, y: 390), while his right foot is mid-air at (x: 225, y: 400), suggesting he is walking with purpose. The red hat on his head tilts slightly to the right as he turns his head slightly, casting a longer shadow across the left side of his face. The blue jacket sways gently, though a new wrinkle has appeared on his back due to the motion. His right hand remains in his jacket pocket, causing the jacket to pull slightly at his waist. His jeans are more wrinkled at the knees, especially on his left leg, which is more extended as he walks. A small gust of wind kicks up some dust from the ground, visible at (x: 250, y: 415) near his left shoe. The red sedan remains parked, but the sunlight reflecting off its windshield has intensified, forming a larger glare at (x: 520, y: 590). The car's shadow continues to shift as the sun moves slightly, now only 110 pixels long from (x: 480, y: 595) to (x: 365, y: 600). The man's shadow has also changed slightly, now stretching from (x: 225, y: 400) to (x: 110, y: 460). The bushes sway more noticeably, and a few leaves detach, drifting across the parking lot, some landing at (x: 150, y: 600). The sunlight filtering through the bushes creates dappled shadows on the concrete wall behind them.

Frame 4: The man's expression shows a hint of determination, with his lips pressed together more tightly and his eyebrows furrowed further. His red hat is slightly askew due to the wind, though it still sits snugly on his head, with the shadow under the brim creating a deeper contrast on his face. His right foot is now fully lifted off the ground at (x: 210, y: 400), while his left foot is planted at (x: 235, y: 390). His blue jacket flutters slightly in the breeze, and the light catches on the zipper near his chest, causing a small reflection at (x: 270, y: 370). His right hand, still in his pocket, pulls the jacket fabric taut across his waist, creating a visible crease along his back. His jeans are more creased at the knees, with the right leg showing deeper folds as it bends mid-stride. The asphalt beneath him shows more detail, with a new crack visible at (x: 120, y: 480). The yellow parking lines remain unchanged, though faint tire marks are more prominent near his current position, at (x: 230, y: 390). The red sedan in the background is still parked, but the sunlight has shifted, and the glare on the windshield is now less intense, positioned at (x: 525, y: 595). A faint breeze blows more dust particles, which now collect near the car's rear bumper at (x: 505, y: 615). The car's shadow has shortened again, now measuring 105 pixels, from (x: 475, y: 590) to (x: 360, y: 600). The man's shadow also adjusts slightly, now stretching from (x: 230, y: 400) to (x: 110, y: 465). The bushes continue to sway in the breeze, with a few more leaves falling, and some of the shadows they cast shift further across the asphalt and onto the distant wall.

Frame 5: The man's head is slightly turned to the left, and his facial expression shows more focus, his gaze directed toward something in the distance. His red hat has shifted just a fraction to the left, now casting a longer shadow across the right side of his face. His right foot is fully grounded at (x: 210, y: 405), while his left foot begins to lift at (x: 230, y: 395). The man's blue jacket has more pronounced folds along the arms, particularly on the left, as he swings his arm forward slightly. His right hand, still in his pocket, pulls the fabric tightly, causing the jacket to bunch slightly at his waist. The jeans are more visibly creased, particularly at the knees, and a faint scuff mark is visible on his right shoe. The asphalt beneath him has a more prominent crack visible at (x: 125, y: 470), running diagonally across the parking lot. The yellow parking lines remain in place, but a faint oil stain can now be seen near the man's left foot at (x: 220, y: 400). The red sedan in the background is still parked, though the glare on the windshield has shifted again, now reflecting sunlight more toward the upper corner at (x: 530, y: 595). The car's shadow continues to shift, now 100 pixels long, from (x: 470, y: 590) to (x: 355, y: 600). The man's shadow has adjusted slightly, now stretching from (x: 210, y: 405) to (x: 95, y: 470). The bushes to the left are still swaying in the wind, with more leaves falling, and their shadows stretch further across the parking lot, some reaching (x: 50, y: 600).

Frame 6: The man has turned his head slightly more to the left, and his facial expression now reflects some level of concern, with his lips pursed and his eyebrows furrowed slightly. His red hat has settled back into place, with the shadow under the brim deepening on the right side of his face. His left foot is now fully lifted off the ground at (x: 220, y: 400), while his right foot remains firmly planted at (x: 205, y: 410). His blue jacket flutters slightly in the breeze, with the zipper now catching the light more prominently, reflecting at (x: 265, y: 380). The jacket pulls slightly across his back, creating deep folds along his waistline. His jeans are wrinkled more deeply at the knees, particularly on the right leg, as he shifts his weight forward. A faint scuff mark is visible on his left shoe, and the asphalt beneath him shows a more detailed crack pattern near his right foot at (x: 130, y: 475). The yellow parking lines remain consistent, though a new oil stain is visible at (x: 210, y: 405) near his right foot. The red sedan remains parked, though the glare on the windshield has diminished slightly, now reflecting less light at (x: 535, y: 600). The car's shadow continues to adjust, now measuring 95 pixels, from (x: 465, y: 590) to (x: 350, y: 600). The man's shadow also shifts, now stretching from (x: 205, y: 410) to (x: 90, y: 470). The bushes continue to sway, and more leaves fall onto the asphalt, some collecting near the curb at (x: 60, y: 600).

Frame 7: The man's expression now appears slightly anxious, with his eyes widening and his lips parting just slightly, as though preparing to say something. His red hat remains in place, though the brim casts a more noticeable shadow across his right cheek. His right foot is now lifted at (x: 200, y: 415), while his left foot is firmly planted at (x: 400). His blue jacket flutters more aggressively in the wind, and the zipper reflects more light at (x: 260, y: 375). A deep crease forms along the back of his jacket as he moves. His jeans are more creased at the knees, especially on his right leg, which is bent slightly as he walks. The asphalt beneath him shows more detailed cracks, particularly near his left foot at (x: 135, y: 475), and a faint oil stain is visible at (x: 215, y: 405). The red sedan remains parked, though the glare on the windshield has shifted slightly again, now reflecting sunlight at (x: 540, y: 600). The car's shadow continues to shorten, now only 90 pixels long, from (x: 460, y: 590) to (x: 345, y: 600). The man's shadow also shifts slightly, now stretching from (x: 200, y: 415) to (x: 85, y: 475). The bushes continue to sway, with more leaves falling, and some of the shadows they cast now stretch further across the parking lot, reaching (x: 55, y: 600).

Frame 8: The man's expression has changed further, now looking more concerned as his lips part slightly, and his eyebrows remain furrowed. His red hat is still perched atop his head, though the shadow under the brim is less pronounced due to the shifting angle of the sun. His left foot is now mid-air at (x: 220, y: 395), while his right foot is firmly planted at (x: 205, y: 405). His blue jacket sways in the wind, and more wrinkles are visible along his sleeves. The zipper catches more light, reflecting at (x: 255, y: 375). His jeans are wrinkled more noticeably at the knees, and a faint scuff mark is visible on his right shoe. The asphalt beneath him shows more detail, with a deep crack visible near his right foot at (x: 140, y: 470). The yellow parking lines remain in place, though the oil stain near his left foot is more pronounced at (x: 215, y: 400). The red sedan remains parked, though the glare on the windshield has shifted slightly, now reflecting sunlight at (x: 545, y: 595). The car's shadow has shortened again, now measuring 85 pixels, from (x: 455, y: 590) to (x: 340, y: 600). The man's shadow has also shifted slightly, now stretching from (x: 205, y: 405) to (x: 90, y: 470). The bushes to the left continue to sway, with more leaves falling, and their shadows stretch further across the parking lot, some reaching (x: 60, y: 600).

Frame 9: The man's expression has become more intense, with his lips parting further, as if he's about to call out. His red hat remains in place, though the shadow it casts across his face is more subdued. His left foot is now fully lifted at (x: 215, y: 395), while his right foot is firmly planted at (x: 205, y: 400). His blue jacket flutters in the wind, and the zipper catches the light more prominently, reflecting at (x: 250, y: 370). The jacket pulls slightly across his back, creating deep folds along his waistline. His jeans are more wrinkled at the knees, particularly on the right leg, which is bent slightly as he walks. The asphalt beneath him shows a more detailed crack pattern near his right foot at (x: 140, y: 470). The yellow parking lines remain consistent, though a new oil stain is visible at (x: 210, y: 405) near his right foot. The red sedan remains parked, though the glare on the windshield has diminished slightly, now reflecting less light at (x: 550, y: 590). The car's shadow continues to adjust, now measuring 80 pixels, from (x: 450, y: 590) to (x: 335, y: 600). The man's shadow also shifts, now stretching from (x: 205, y: 400) to (x: 85, y: 465). The bushes to the left continue to sway, with more leaves falling, and their shadows stretch further across the parking lot.

Frame 10: The man has now turned his head slightly to the right, and his expression reflects concern, with his lips parted and his eyebrows furrowed slightly. His red hat remains on his head, though the shadow it casts across his face is more pronounced due to the sun's shifting position. His left foot is now fully lifted at (x: 210, y: 400), while his right foot remains firmly planted at (x: 205, y: 405). His blue jacket flutters in the wind, and the zipper catches more light, reflecting at (x: 245, y: 370). The jacket pulls slightly across his back, creating deep folds along his waistline. His jeans are wrinkled more deeply at the knees, particularly on the right leg, which is bent slightly as he walks. The asphalt beneath him shows a more detailed crack pattern near his right foot at (x: 135, y: 475). The yellow parking lines remain consistent, though a new oil stain is visible at (x: 210, y: 405) near his right foot. The red sedan remains parked, though the glare on the windshield has diminished slightly, now reflecting less light at (x: 545, y: 590). The car's shadow continues to adjust, now measuring 75 pixels, from (x: 445, y: 590) to (x: 330, y: 600). The man's shadow also shifts, now stretching from (x: 210, y: 405) to (x: 95, y: 470). The bushes continue to sway, with more leaves falling, and their shadows stretch further across the parking lot, some reaching (x: 50, y: 600).

This video surveillance storage optimization framework leverages advanced Vision-Language Models (VLMs) to significantly reduce storage requirements while enabling efficient retrieval and forensic search of recorded video footage. The present system converts video frames into concise textual descriptions and strategically stores key reference frames, facilitating effective storage management and rapid access to pertinent video content.

In one example, several modules may be used to implement the video surveillance storage optimization framework including a Conversion Module and a Retrieval Module. Examples of each of these modules are described in more detail below:

Conversion Module

Video Recording and Initial Processing: Recorded videos are loaded into the system and the system processes the video frames through Video-to-Language Models (VLMs) for scene description generation. Assume we have a recorded video from a security camera in a parking area. The video is loaded into the system for processing. Example Video: parking_area_camera_3_2024-06-13.mp4

Scene Description Generation: VLMs (e.g., CLIP, UniVL) analyze each video frame to generate concise textual descriptions (see example descriptions of Frames 1-10 above). The generated descriptions capture key details of each frame, such as objects, actions, and/or scenes. In one example, the system processes each video frame using Vision-Language Models (VLMs) such as CLIP or UniVL. Each frame is analyzed to generate concise textual descriptions capturing key details (objects, actions, and/or scenes). Example Frames and Descriptions:

Frame 1: "Person walking with a red hat" Embedding: $\mathbf{E}^{\rightarrow}1$
Frame 2: "Person walking with a red hat" Embedding: $\mathbf{E}^{\rightarrow}2$
Frame 11: "Person running" Embedding: $\mathbf{E}^{\rightarrow}11$
Frame 21: "Car entering" Embedding: $\mathbf{E}^{\rightarrow}21$

Storage of Textual Descriptions and Metadata: The textual descriptions are stored in a compact format (e.g., JSON, XML) along with metadata such as timestamp, camera ID and location. A simplified example description in JSON format is as follows:

```
Sample json
[
    {
        "timestamp": "2024-06-13T12:34:56Z",
        "camera_id": "camera_3",
        "location": "parking_area",
        "description": "Person walking with a red hat",
        "reference_frame": "frame_001.jpg"
    },
    {
        "timestamp": "2024-06-13T12:35:01Z",
        "camera_id": "camera_3",
        "location": "parking_area",
        "description": "Person running",
        "reference_frame": "frame_011.jpg"
    },
    {
        "timestamp": "2024-06-13T12:35:21Z",
        "camera_id": "camera_3",
        "location": "parking_area",
        "description": "Car entering",
        "reference_frame": "frame_021.jpg"
    }
]
```

Reference Frame Selection and Association: Preprocess the textual description of all the frames. Do a semantic study of the textual features using sentence embeddings (e.g., Sentence-BERT) and cosine similarity. Mark the frames where there is a threshold change in the semantics of the descriptions using cosine similarity, attention mechanisms, and temporal consistency checks. Assign the reference frames to each of the frames' metadata. All frames will initially have the first frame of the video as the reference. When a significant semantic change is detected, the reference is updated to the new frame. This process continues, with the reference frame being updated to subsequent frames as substantial semantic changes are identified. This method may help ensure that each frame's metadata includes an appropriate reference frame that accurately represents significant visual changes in the video.

Semantic Study of Textual Features may be performed including, for example, calculating a cosine similarity between consecutive frame embeddings. Cosine Similarity (CS) measures similarity between vector embeddings of frame descriptions. A higher value means less change between frames.

$$CS_{ij} = \frac{\vec{E_i} \cdot \vec{E_j}}{\|\vec{E_i}\| \, \|\vec{E_j}\|} \quad ,$$

where $\vec{E_i}$ and $\vec{E_j}$ are the embedding vectors of frames I and j. Example Cosine Similarities between frames may include: Cosine Similarity ($\vec{E}1$, $\vec{E}2$) = 0.98 (No significant change); Cosine Similarity ($\vec{E}2$, $\vec{E}11$) = 0.45 (Significant change detected, mark as reference frame); and Cosine Similarity ($\vec{E}11$, $\vec{E}21$) = 0.30 (Another significant change detected, mark as reference frame). These are just examples.

Semantic Study of Textual Features may be include using attention mechanisms to analyze shifts in contextual focus between frames. An example attention mechanism may include noting an attention shift from "red hat" to "running" (Frame 2 to Frame 11), and an attention shift from "running" to "car entering" (Frame 11 to Frame 21). The attention mechanism (AM) may capture shifts in focus between frames by analyzing word-level attention in the descriptions. These shifts signify important contextual changes, which may not be captured fully by cosine similarity alone. This attention mechanism may compute attention for each token (word) in a sequence by calculating its importance (weight) relative to all other tokens in the sequence. An attention matrix may be generated for each frame, where each element represents how much focus (or attention) one word (or token) has relative to another word. In each frame, every word has its own attention score, which tells us how much attention it is receiving compared to other words. This may be calculated by performing a dot product between the embeddings of the words, followed by a softmax normalization. This gives a probability distribution of attention across the words in the sequence. Attention Weights indicate how much focus is placed on each token when the model is processing the sequence. Each token's attention to every other token is stored in the attention matrix, with the size of the matrix being proportional to the number of tokens (e.g., for 5 words, you'd have a 5x5 matrix). An attention score gives a global measure of how much the attention has shifted between frames. A higher attention score indicates that the scene has changed significantly, either in terms of objects or contextual focus. A goal of comparing attention matrices between two frames is to understand how much the attention changes from one frame to another. The formula used to calculate the shift in attention (using the Frobenius norm) measures how different the attention matrices are.

$$AM(i,j) = \|\vec{A_i} - \vec{A_j}\|_F \quad ,$$

where $\vec{A_i}$ and $\vec{A_j}$ are the attention matrices for frames i and j. where $\|\cdot\|_F$ denotes the Frobenius norm, which is a matrix norm capturing the difference between two attention matrices. A higher value of the attention score AM(i,j) indicates a greater shift in attention between the two frames, suggesting that the scene has changed significantly in a semantic or contextual way.

Semantic Study of Textual Features may be include using temporal consistency checks to confirm sustained semantic changes. Maintaining a rolling average of cosine similarities over a sequence of frames may be used to detect long-term semantic drifts, where instantaneous changes might not be significant but gradual changes accumulate.

$$TC_i = \frac{1}{N} \sum_{k=i-N}^{i} CS_{k,k+1} \quad , \qquad ,$$

where N is the window size (for instance, 5 or 10 frames). Example temporal consistency checks may include a rolling average of cosine similarity for frames 1-10 remaining high, followed by the rolling average for frames 11-20 dropping significantly.

In some cases, a score S(i) may be formulated to decide whether frame I should be a reference frame. In one example, the score S(i) may weigh three components: **Cosine Similarity, Attention Mechanism,** and **Temporal Consistency** discussed above. The score may be a weighted combination of these components as follows:

$$S(i) = \alpha \cdot CS(i\text{-}1,i) + \beta \cdot AM(i\text{-}1,i) + \gamma \cdot TC(i)$$

where:

$\alpha$, $\beta$ and $\gamma$ are the weights to balance the importance of each metric.
CS(i-1,i) is the cosine similarity between the previous and current frame.
AM(i-1,i) is the attention score between the previous and current frame.
TC(i) is the temporal consistency for frame i.

Role and significance of each weighing parameter,

$\alpha$ : High weight if changes are expected to be mostly visual (low-level).
$\beta$: High weight if changes are mostly semantic or conceptual (high-level).
$\gamma$: Important for detecting gradual scene evolution over time.

We start with an initial value of 0.3, 0.3, 0.3 for each of the parameters $\alpha$, $\beta$ and $\gamma$, We then pass the frame descriptions of the current frames and all the available frames to an LLM system, which is prompted to determine and fine tunes the value of $\alpha$, $\beta$ and $\gamma$ as well the threshold value so that the S(i) score can be used to accurately mark the frames as reference frames. A frame i is considered a reference frame if the score S(i) exceeds a threshold T. This threshold T is suggested by the LLM model and evolves over time. If S(i)>T, then frame i is marked as a reference frame. More generally, frames where there is a significant change in semantics may be marked. For example, Frame 11 and Frame 21 may be marked as reference frames due to significant changes in the scene description. Initially, all frames may be assigned Frame 1 as its reference frame. Then, and continuing with this example, frames 11-20 will be assigned Frame 11 as their reference frame, and frames 21 onward will be assigned Frame 21 as their reference frame as expressed in the below table:

Frames 1-10: Reference Frame 1.
Frames 11-20: Reference Frame 11.
Frames 21 onwards: Reference Frame 21

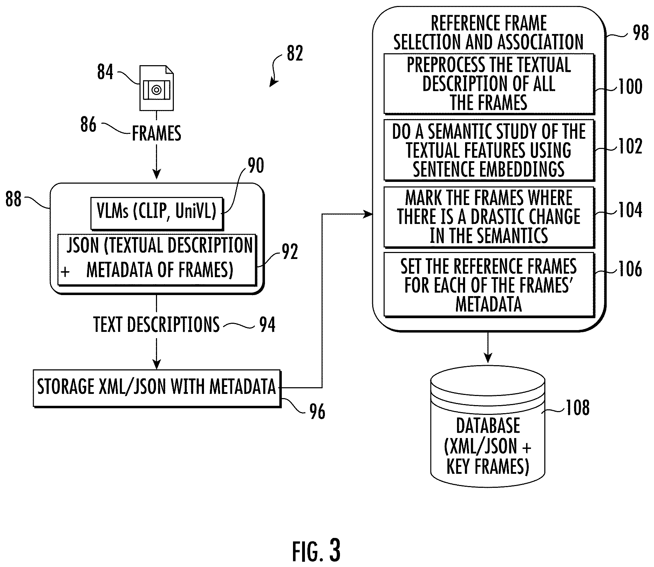

Only reference frames (along with the textual descriptions of all of the intervening frames) are stored, significantly reducing the overall storage requirements. This is shown for example in Figure 3, which is a flow diagram showing an illustrative method 82. A video feed 84 includes video frames 86, which are fed to an artificial intelligence (AI) model 88. The AI model 88 may include one or more VLMs 90, for example, and a JSON engine 92 that is configured to provide textual descriptions and metadata pertaining to the video frames 86. The AI model 88 outputs text descriptions 94 to storage, as indicated at block 96. The text descriptions 94 are provided to a reference frame selection and association block 98. The reference frame selection and association block 98 includes preprocessing, as indicated at block 100. The reference frame selection and association block 98 includes a semantic study, as indicated at block 102. The reference frame selection and association block 98 includes marking frames with threshold changes, as indicated at block 104. The reference frame selection and association block 98 includes setting the reference frames, as indicated at block 106. The text and reference frames are stored in a database 108.

Retrieval Module

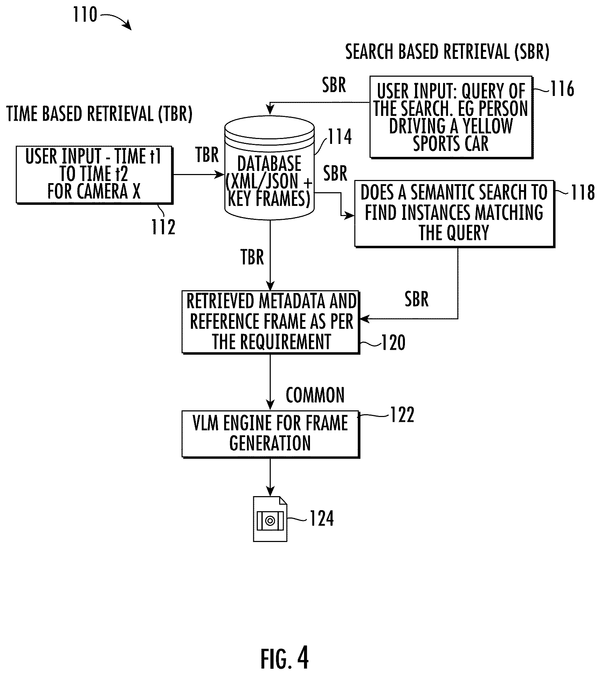

The retrieval module reconstructs desired video footage from the reference video frames and the textual descriptions of the remaining video frames. Figure 4 is a flow diagram showing an illustrative method 110. The method 110 shows a time-based retrieval (TBR) option and a search-based retrieval (SBR) option. For the TBR option, a user inputs a particular time range for a particular camera, as indicated at block 112. This information is provided to a database 114. For the TBR option, the retrieved metadata and reference frames are provided from the database 114 to the block 120. For the SBR option, a user inputs a query, as indicated at block 116. This information is provided to the database 114. For the SBR option, the database outputs a semantic search, as indicated at block 118. Retrieved metadata and reference frames are provided, as indicated at block 120. Next, and common to both the TBR option and the SBR option, a VLM engine uses the retrieved metadata and reference frames to generate reconstructed video frames, as indicated at block 122. The generated reconstructed video frames may then be assembled into a video clip 124.

Examples

Scenario 1: Retrieval of Recordings Based on Timeline User Request: A user requests video footage from time t1 to time t2. Data Retrieval: The system fetches all relevant JSON/XML files containing textual descriptions and metadata for frames within the specified time range, along with the corresponding reference frames. Video Reconstruction: Using VLMs such as InstructPix2Pix, Stable Diffusion (with inpainting), or BLIP, the system reconstructs the video frames from the textual descriptions using the respective reference frames as references. Playback: The reconstructed video is presented to the user.

Scenario 2: Forensic Search User Request: A user performs a forensic search with a query like "a person walking with a red hat in camera 3 parking area." Textual Search: The system searches the stored textual descriptions for matches to the query. Data Retrieval: Relevant JSON/XML files are fetched based on the search results. Frame Reconstruction: Specific frames are reconstructed using VLMs to visualize the queried incident. Result Presentation: The relevant video snippets or frames are displayed to the user

Imagine a user needs to investigate an incident in the parking area where a person was reported to be seen wearing a red hat. The user inputs the query into the system. The system searches the stored descriptions, finds the relevant JSON files, and uses models like InstructPix2Pix or Stable Diffusion to recreate the frames showing the person with the red hat. The user can then view the reconstructed footage, quickly identifying the incident without sifting through hours of raw video.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

**Claims**

**1.** A method for storing video surveillance data of a video surveillance system in a video surveillance data repository (18), the method comprising:

receiving a video feed (14) captured by a video camera (16) of the video surveillance system, the video feed including a plurality of consecutive video frames;

generating a text-based description for each of the plurality of consecutive video frames using an Artificial Intelligence (AI) based Video-to-Language Model (VLM) (22), the text-based description describing one or more of an object, an activity and/or a scene captured in the respective video frame of the plurality of consecutive video frames;

selecting less than all of the plurality of consecutive video frames of the video feed to be reference video frames, wherein the selection is based at least in part on the text-based descriptions for the plurality of consecutive video frames;

storing the text-based descriptions for each of the plurality of consecutive video frames to the video surveillance data repository; and

storing the reference video frames to the video surveillance data repository while not storing those video frames of the plurality of consecutive video frames that are not selected as reference video frames.

**2.** The method of claim 1, further comprising:

for each of the generated text-based descriptions, identifying a corresponding one of the reference video frames, wherein at least two of the text-based descriptions correspond to a common reference video frame; and

storing a correspondence between the generated text-based descriptions and the reference video frames.

**3.** The method of either of claims 1-2, wherein selecting less than all of the plurality of consecutive video frames of the video feed to be reference video frames comprises:

determining when the text-based descriptions of the plurality of consecutive video frames indicate at least a threshold change in one or more of an object, an activity and/or a scene between two consecutive video frames of the plurality of consecutive video frames, and when so, selecting the later one of the two consecutive video frames as one of the reference video frames.

4. The method any of claims 1-2, wherein selecting less than all of the plurality of consecutive video frames of the video feed to be reference video frames comprises:
determining when the text-based descriptions of the plurality of consecutive video frames do not indicate at least a threshold change in one or more of an object, an activity and/or a scene between two consecutive video frames of the plurality of consecutive video frames, and when so, not selecting the later one of the two consecutive video frames as one of the reference video frames.

5. The method of any of claims 1-4, further comprising:

tokenizing and embedding the text-based description of each of the plurality of consecutive video frames;
determining a similarity index between the embedded text-based descriptions of pairs of consecutive video frames of the plurality of consecutive video frames; and
for each pair of consecutive video frames, when the similarity index between the embedded text-based descriptions of the pair of consecutive video frames falls below a threshold value, select the later one of the pair of consecutive video frames as a reference video frame.

6. The method of any of claims 1-4, further comprising:

tokenizing and embedding the text-based description of each of the plurality of consecutive video frames;
determining a similarity index between the embedded text-based descriptions of pairs of consecutive video frames of the plurality of consecutive video frames; and
determining a rolling average of the similarity indices for at least part of the plurality of consecutive video frames, and when the rolling average of the similarity indices changes by more than a temporal consistency threshold, selecting one of the plurality of consecutive video frames as a reference video frame.

7. The method of any of claims 1-6, further comprising:

determining an attention score for each of the text-based descriptions for each of the plurality of consecutive video frames;
determining when the attention score changes between pairs of consecutive video frames of the plurality of consecutive video frames by more than an attention change threshold; and
for each pair of consecutive video frames, when the attention score changes between the pair of consecutive video frames by more than the attention change threshold, selecting the later one of the pair of consecutive video frames as a reference video frame.

8. The method of any of claims 1-4, further comprising:

tokenizing and embedding the text-based description of each of the plurality of consecutive video frames;
determining a similarity index between the embedded text-based descriptions of pairs of consecutive video frames of the plurality of consecutive video frames;
determining an attention score for each of the text-based descriptions for each of the plurality of consecutive video frames, and determining an attention score change between pairs of consecutive video frames of the plurality of consecutive video frames;
determining a rolling average of the similarity indices for at least part of the plurality of consecutive video frames, and determining a change in the rolling average of the similarity indices; and
determining a reference frame detection trigger parameter based on a weighted combination of the similarity index, the attention score change and the change in the rolling average of the similarity indices, wherein when the reference frame detection trigger parameter meets a reference frame reference trigger threshold, selecting a corresponding one of the plurality of consecutive video frames as one of the reference video frames.

9. The method of any of claims 1-8, further comprising:

receiving an input query from a user;
retrieving from the video surveillance data repository a plurality of matching text-based descriptions that match the input query;
retrieving from the video surveillance data repository one or more reference video frames that correspond to the plurality of matching text-based descriptions; and
generating a reconstructed video feed using an Artificial Intelligence (AI) based Text-to- Video Model (TVM) (24), the TVM using the one or more reference video frames as a reference input to generate a plurality of reconstructed video frames that reconstruct the plurality of matching text-based descriptions.

10. The method of claim 9, wherein the input query comprises one or more of a time based query and a search based query.

11. A system for storing video surveillance data, comprising:

an input (12) for receiving a video feed (14) captured by a video camera (16);
a video surveillance data repository (18);
a controller (20) operatively coupled to the input and the video surveillance data repository, the controller configured to:

receive the video feed captured by the video camera, the video feed including a plurality of consecutive video frames;
generate a text-based description for each of the plurality of consecutive video frames using an Artificial Intelligence (AI) based Video-to-Language Model (VLM) (22), the text-based description describing one or more of an object, an activity and/or a scene captured in the respective video frame of the plurality of consecutive video frames;
select less than all of the plurality of consecutive video frames of the video feed to be reference video frames, wherein the selection is based at least in part on the text-based descriptions for the plurality of consecutive video frames;
store the text-based descriptions for each of the plurality of consecutive video frames to the video surveillance data repository; and
store the reference video frames to the video surveillance data repository while not storing those video frames of the plurality of consecutive video frames that are not selected as reference video frames.

12. The system of claim 11, wherein the controller is configured to:

for each of the generated text-based descriptions, identify a corresponding one of the reference video frames, wherein at least two of the text-based descriptions correspond to a common reference video frame; and
store a correspondence between the generated text-based descriptions and the reference video frames.

13. The system of either of claims 11-12, wherein the controller is configured to:
select one of the plurality of consecutive video frames of the video feed as a reference video frame when the text-based descriptions of the plurality of consecutive video frames indicate at least a threshold change in context in the text-based descriptions of the plurality of consecutive video frames.

14. The system of any of claims 11-13, wherein the controller is configured to:

tokenize the text-based description of each of the plurality of consecutive video frames;
determine a similarity index between the embedded text-based descriptions of pairs of consecutive video frames of the plurality of consecutive video frames; and
determine when the threshold change in context in the text-based descriptions of the plurality of consecutive video frames has occurred based at least in part on whether the similarity index between the embedded text-based descriptions falls below a threshold value.

15. A non-transitory computer readable medium storing instructions that when executed by one or more processors cause the one or more processors to:

receive a video feed (12) captured by a video camera (16), the video feed including a plurality of video frames;
generate a text-based description for each of the plurality of video frames using an Artificial Intelligence (AI) based Video-to-Language Model (VLM) (22), the text-based description describing one or more of an object, an activity and/or a scene captured in the respective video frame of the plurality of video frames;
select less than all of the plurality of video frames of the video feed to be reference video frames, wherein the selection is based at least in part on the text-based descriptions for the plurality of video frames;
store the text-based descriptions for each of the plurality of video frames to a video surveillance data repository (18); and

store the reference video frames to the video surveillance data repository while not storing those video frames of the plurality of video frames that are not selected as reference video frames.

FIG. 1

26

RECEIVING A VIDEO FEED CAPTURED BY A VIDEO CAMERA OF THE VIDEO SURVEILLANCE SYSTEM, THE VIDEO FEED INCLUDING A PLURALITY OF CONSECUTIVE VIDEO FRAMES ~28

GENERATING A TEXT-BASED DESCRIPTION FOR EACH OF THE PLURALITY OF CONSECUTIVE VIDEO FRAMES USING AN ARTIFICIAL INTELLIGENCE (AI) BASED VIDEO-TO-LANGUAGE MODEL (VLM), THE TEXT-BASED DESCRIPTION DESCRIBING ONE OR MORE OF AN OBJECT, AN ACTIVITY AND/OR A SCENE CAPTURED IN THE RESPECTIVE VIDEO FRAME OF THE PLURALITY OF ONSECUTIVE VIDEO FRAMES ~30

SELECTING LESS THAN ALL OF THE PLURALITY OF CONSECUTIVE VIDEO FRAMES OF THE VIDEO FEED TO BE REFERENCE VIDEO FRAMES, WHEREIN THE SELECTION IS BASED AT LEAST IN PART ON THE TEXT-BASED DESCRIPTIONS FOR THE PLURALITY OF CONSECUTIVE VIDEO FRAMES ~32

STORING THE TEXT-BASED DESCRIPTIONS FOR EACH OF THE PLURALITY OF CONSECUTIVE VIDEO FRAMES TO THE VIDEO SURVEILLANCE DATA REPOSITORY ~34

STORING THE REFERENCE VIDEO FRAMES TO THE VIDEO SURVEILLANCE DATA REPOSITORY WHILE NOT STORING THOSE VIDEO FRAMES OF THE PLURALITY OF CONSECUTIVE VIDEO FRAMES THAT ARE NOT SELECTED AS REFERENCE VIDEO FRAMES ~36

FOR EACH OF THE GENERATED TEXT-BASED DESCRIPTIONS, IDENTIFYING A CORRESPONDING ONE OF THE REFERENCE VIDEO FRAMES, WHEREIN AT LEAST TWO OF THE TEXT-BASED DESCRIPTIONS CORRESPOND TO A COMMON REFERENCE VIDEO FRAME ~38

STORING A CORRESPONDENCE BETWEEN THE GENERATED TEXT-BASED DESCRIPTIONS AND THE REFERENCE VIDEO FRAMES ~40

TO FIG. 2B

FIG. 2A

FROM FIG. 2A

26

SELECTING LESS THAN ALL OF THE PLURALITY OF CONSECUTIVE VIDEO FRAMES OF THE VIDEO FEED TO BE REFERENCE VIDEO FRAMES INCLUDES DETERMINING WHEN THE TEXT-BASED DESCRIPTIONS OF THE PLURALITY OF CONSECUTIVE VIDEO FRAMES INDICATE AT LEAST A THRESHOLD CHANGE IN ONE OR MORE OF AN OBJECT, AN ACTIVITY AND/OR A SCENE BETWEEN TWO CONSECUTIVE VIDEO FRAMES OF THE PLURALITY OF CONSECUTIVE VIDEO FRAMES, AND WHEN SO, SELECTING THE LATER ONE OF THE TWO CONSECUTIVE VIDEO FRAMES AS ONE OF THE REFERENCE VIDEO FRAMES

42

SELECTING LESS THAN ALL OF THE PLURALITY OF CONSECUTIVE VIDEO FRAMES OF THE VIDEO FEED TO BE REFERENCE VIDEO FRAMES INCLUDES DETERMINING WHEN THE TEXT-BASED DESCRIPTIONS OF THE PLURALITY OF CONSECUTIVE VIDEO FRAMES DO NOT INDICATE AT LEAST A THRESHOLD CHANGE IN ONE OR MORE OF AN OBJECT, AN ACTIVITY AND/OR A SCENE BETWEEN TWO CONSECUTIVE VIDEO FRAMES OF THE PLURALITY OF CONSECUTIVE VIDEO FRAMES, AND WHEN SO, NOT SELECTING THE LATER ONE OF THE TWO CONSECUTIVE VIDEO FRAMES AS ONE OF THE REFERENCE VIDEO FRAMESAN ACTIVITY AND/OR A SCENE CAPTURED IN THE RESPECTIVE VIDEO FRAME OF THE PLURALITY OF CONSECUTIVE VIDEO FRAMES

44

TOKENIZING AND EMBEDDING THE TEXT-BASED DESCRIPTION OF EACH OF THE PLURALITY OF CONSECUTIVE VIDEO FRAMES

46

DETERMINING A SIMILARITY INDEX BETWEEN THE EMBEDDED TEXT-BASED DESCRIPTIONS OF PAIRS OF CONSECUTIVE VIDEO FRAMES OF THE PLURALITY OF CONSECUTIVE VIDEO FRAMES

48

FOR EACH PAIR OF CONSECUTIVE VIDEO FRAMES, WHEN THE SIMILARITY INDEX BETWEEN THE EMBEDDED TEXT-BASED DESCRIPTIONS OF THE PAIR OF CONSECUTIVE VIDEO FRAMES FALLS BELOW A THRESHOLD VALUE, SELECT THE LATER ONE OF THE PAIR OF CONSECUTIVE VIDEO FRAMES AS A REFERENCE VIDEO FRAME

50

TOKENIZING AND EMBEDDING THE TEXT-BASED DESCRIPTION OF EACH OF THE PLURALITY OF CONSECUTIVE VIDEO FRAMES

52

TO FIG. 2C

FIG. 2B

26

DETERMINING A SIMILARITY INDEX BETWEEN THE EMBEDDED TEXT-BASED DESCRIPTIONS OF PAIRS OF CONSECUTIVE VIDEO FRAMES OF THE PLURALITY OF CONSECUTIVE VIDEO FRAMES — 54

DETERMINING A ROLLING AVERAGE OF THE SIMILARITY INDICES FOR AT LEAST PART OF THE PLURALITY OF CONSECUTIVE VIDEO FRAMES, AND WHEN THE ROLLING AVERAGE OF THE SIMILARITY INDICES CHANGES BY MORE THAN A TEMPORAL CONSISTENCY THRESHOLD, SELECTING ONE OF THE PLURALITY OF CONSECUTIVE VIDEO FRAMES AS A REFERENCE VIDEO FRAME — 56

DETERMINING AN ATTENTION SCORE FOR EACH OF THE TEXT-BASED DESCRIPTIONS FOR EACH OF THE PLURALITY OF CONSECUTIVE VIDEO FRAMES — 58

DETERMINING WHEN THE ATTENTION SCORE CHANGES BETWEEN PAIRS OF CONSECUTIVE VIDEO FRAMES OF THE PLURALITY OF CONSECUTIVE VIDEO FRAMES BY MORE THAN AN ATTENTION CHANGE THRESHOLD — 60

FOR EACH PAIR OF CONSECUTIVE VIDEO FRAMES, WHEN THE ATTENTION SCORE CHANGES BETWEEN THE PAIR OF CONSECUTIVE VIDEO FRAMES BY MORE THAN THE ATTENTION CHANGE THRESHOLD, SELECTING THE LATER ONE OF THE PAIR OF CONSECUTIVE VIDEO FRAMES AS A REFERENCE VIDEO FRAME — 62

TOKENIZING AND EMBEDDING THE TEXT-BASED DESCRIPTION OF EACH OF THE PLURALITY OF CONSECUTIVE VIDEO FRAMES — 64

DETERMINING A SIMILARITY INDEX BETWEEN THE EMBEDDED TEXT-BASED DESCRIPTIONS OF PAIRS OF CONSECUTIVE VIDEO FRAMES OF THE PLURALI-TY OF CONSECUTIVE VIDEO FRAMES — 66

DETERMINING AN ATTENTION SCORE FOR EACH OF THE TEXT-BASED DESCRIPTIONS FOR EACH OF THE PLURALITY OF CONSECUTIVE VIDEO FRAMES, AND DETERMINING AN ATTENTION SCORE CHANGE BETWEEN PAIRS OF CONSECUTIVE VIDEO FRAMES OF THE PLURALITY OF CONSECUTIVE VIDEO FRAMES — 68

TO FIG. 2D

FIG. 2C

FROM FIG. 2C ⟋26

DETERMINING A ROLLING AVERAGE OF THE SIMILARITY INDICES FOR AT LEAST PART OF THE PLURALITY OF CONSECUTIVE VIDEO FRAMES, AND DETERMINING A CHANGE IN THE ROLLING AVERAGE OF THE SIMILARITY INDICES — 70

DETERMINING A REFERENCE FRAME DETECTION TRIGGER PARAMETER BASED ON A WEIGHTED COMBINATION OF THE SIMILARITY INDEX, THE ATTENTION SCORE CHANGE AND THE CHANGE IN THE ROLLING AVERAGE OF THE SIMILARITY INDICES, WHEREIN WHEN THE REFERENCE FRAME DETECTION TRIGGER PARAMETER MEETS A REFERENCE FRAME REFERENCE TRIGGER THRESHOLD, SELECTING A CORRESPONDING ONE OF THE PLURALITY OF CONSECUTIVE VIDEO FRAMES AS ONE OF THE REFERENCE VIDEO FRAMES — 72

RECEIVING AN INPUT QUERY FROM A USER — 74

RETRIEVING FROM THE VIDEO SURVEILLANCE DATA REPOSITORY A PLURAL-ITY OF MATCHING TEXT-BASED DESCRIPTIONS THAT MATCH THE INPUT QUERY — 76

RETRIEVING FROM THE VIDEO SURVEILLANCE DATA REPOSITORY ONE OR MORE REFERENCE VIDEO FRAMES THAT CORRESPOND TO THE PLURALITY OF MATCHING TEXT-BASED DESCRIPTIONS — 78

GENERATING A RECONSTRUCTED VIDEO FEED USING AN ARTIFICIAL INTELLIGENCE (AI) BASED TEXT-TO- VIDEO MODEL (TVM), THE TVM USING THE ONE OR MORE REFERENCE VIDEO FRAMES AS A REFERENCE INPUT TO GENERATE A PLURALITY OF RECONSTRUCTED VIDEO FRAMES THAT RECONSTRUCT THE PLURALITY OF MATCHING TEXT-BASED DESCRIPTIONS — 80

FIG. 2D

FIG. 3

110

SEARCH BASED RETRIEVAL (SBR)

SBR | USER INPUT: QUERY OF THE SEARCH. EG PERSON DRIVING A YELLOW SPORTS CAR ~116

TIME BASED RETRIEVAL (TBR)

USER INPUT - TIME t1 TO TIME t2 FOR CAMERA X

112

TBR

DATABASE (XML/JSON + KEY FRAMES) 114

SBR

DOES A SEMANTIC SEARCH TO FIND INSTANCES MATCHING THE QUERY ~118

TBR

RETRIEVED METADATA AND REFERENCE FRAME AS PER THE REQUIREMENT ~120

SBR

COMMON

VLM ENGINE FOR FRAME GENERATION ~122

124

FIG. 4

Europäisches Patentamt

European Patent Office

Office européen des brevets

**EUROPEAN SEARCH REPORT**

Application Number

EP 25 20 9733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Teja Ravi: "Surveillance Video Summarizer: AI-Powered Video Analysis and Summarization", <br><br> , <br> 13 September 2024 (2024-09-13), <br> XP093378586, <br> Retrieved from the Internet: <br> URL:https://web.archive.org/web/2024091322 0737/https://github.com/Ravi-Teja-konda/Su rveillance_Video_Summarizer <br> * last two paragraphs; <br> page 1 * <br> * "Features"; <br> page 2 * <br> * "How it Works"; <br> page 3 * <br> ----- | 1-15 | INV. <br> G06F16/783 |
| X | US 2023/086735 A1 (YAN NING [US]) <br> 23 March 2023 (2023-03-23) <br> * paragraphs [0004], [0029], [0049], [0050], [0055], [0057], [0061], [0086], [0087] * <br> * figures 2A, 2B, 3, 4A, 4B * <br> ----- | 1-15 | |

TECHNICAL FIELDS SEARCHED (IPC)

G06F

The present search report has been drawn up for all claims

| Place of search | Date of completion of the search | Examiner |
|---|---|---|
| The Hague | 18 March 2026 | Martínez Espuche, F |

EPO FORM 1503 03.82 (P4C01)

## EP 4 742 060 A1

### ANNEX TO THE EUROPEAN SEARCH REPORT
### ON EUROPEAN PATENT APPLICATION NO.

EP 25 20 9733

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2026

| Patent document cited in search report | Publication date | Patent family member(s) | Publication date |
|---|---|---|---|
| US 2023086735 A1 | 23-03-2023 | CN 116034401 A | 28-04-2023 |
| | | EP 4150523 A1 | 22-03-2023 |
| | | US 2023086735 A1 | 23-03-2023 |
| | | WO 2021035227 A1 | 25-02-2021 |

For more details about this annex : see Official Journal of the European Patent Office, No. 12/82